# EUROPEAN PATENT APPLICATION

(11) **EP 1 415 711 A2**
(43) Date of publication of application: **06.05.2004**
(21) Application number: 03256608.5
(22) Date of filing: 21.10.2003
(51) Int. Cl.: B01J 20/28, B01J 20/30, B01J 20/20

(54) **Method of forming a (CFx)n containing adsorbent composition**

(30) Priority: 31.10.2002 US 285117
(71) Applicant: THE BOC GROUP, INC., Murray Hill, New Providence, New Jersey 07974-2082 (US)
(72) Inventor: Bulow, Martin, Basking Ridge NJ 07920-3043 (US); Satchell, Donald Prentice, Jr., Berkeley Heights NJ 07922-1268 (US); Ezell, Edward Frederick, Warren NJ 07059 (US); Kuhnert, Jan-Thomas, Thuringen 07646 (DE); Schops, Wolfgang, Thuringen 07629 (DE)
(74) Representative: Wickham, Michael

(57) **Abstract**

A method of forming an adsorbent composition suitable for preferentially separating a fluorine-containing gas from a gas stream containing the same comprising:
a) combining a (CF_{X})ₙ starting material with a non-fluorinated carbonaceous material wherein x in the starting (CF_{X})ₙ material is from about 0.6 to 1.2 and n is an integer, to form a mixture;
b) exerting sufficient pressure on the mixture to form a shaped solid body;
c) heating the shaped solid body to a temperature of at least 100°C to form a heated shaped solid body; and
d) exposing the thus heated shaped solid body to a fluorine-containing gas under conditions sufficient to fluorinate the heated shaped solid body to produce a (CF_{X})ₙ final product wherein x is from about 0.5 to 1.2.

## Description

### Field Of The Invention

The present invention is generally directed to a method of forming an adsorbent composition, which contains (CFₓ)ₙ as the adsorbent material. The method is performed by mixing a (CFₓ)ₙ starting material with a non-fluorinated carbonaceous material and compressing the mixture to form an intermediate solid body, which is then fluorinated to produce the final product. The final product is particularly suited as an adsorbent composition for the preferential separation of a fluorine-containing gas from a gas stream containing the same.

### Background Of The Invention

Graphite fluoride, (CFₓ)ₙ with varying fluorine content , which is expressed by a range of values for the subscript x, and where n is an integer, has been known since the 1930s. Such compounds are generally produced by reacting a finely divided non-fluorinated carbonaceous material (e.g., graphite) with gaseous fluorine (F₂) at elevated temperatures and fluorine partial pressures that vary with the reaction temperature. Graphite fluoride possesses significant physicochemical properties such as low surface energy, low wettability as a result of its high hydrophobicity, superior lubricating characteristics, and oxidizing ability making it ideally suited as a lubricant as well as a packing material, i.e., adsorbent, for use in gas-chromatographic analyses and for the separation of a fluorine-containing gas from gas streams containing the same. The properties of (CFₓ)ₙ and possible utilization of the same are disclosed, for example, in Yasasushi Kita et al., J. Amer. Chem. Soc. 101:14, pp. 3832-3841 (1979), incorporated herein by reference.

Graphite fluoride has been employed specifically as a column-packing material for use in gas chromatography. Gas-chromatographic methods were developed into effective means for separating a target gas, e.g. F₂, from a gas stream. In particular, various gases exhibit different retention times such that they are temporarily adsorbed by the packing material and desorbed after a component-specific period of time, for a given adsorbent. The length of time before desorption is determined by a physical and/or chemical interaction between the packing material and the adsorbing gas species. Different gases are adsorbed for different periods of time, and, if a minimum length of a time is achieved and the components which are to be separated differ sufficiently in their retention times, effective separation takes place.

When a column is operated with just a solid packing material the process is generally referred to as gas-solid chromatography. When a solid packing material is coated with a liquid so that the gases interact with the liquid coating, such a process is referred to as gas-liquid chromatography, and the solid packing material is referred to as a solid support.

Graphite fluoride has also been employed in gas-chromatographic analysis of reactive fluoride gases such as the direct separation of fluorine gas (F₂) in the presence of mixtures that contain nitrogen gas (N₂), oxygen gas (O₂), chlorine gas (Cl₂), and various halocarbons. A procedure for employing graphite fluoride for gas chromatographic analysis is disclosed in U.S. Patent No. 3,877,894, incorporated herein by reference.

The graphite fluoride adsorbent material of the invention is particularly suited to treat mixtures comprised of F₂ and combinations of such gases as, NF₃, CF₄, CO₂, N₂O, SiF₄, and SF₆ in order to purify the F₂ component. The adsorbent material may also be used to purify fluorine gases by removal of hydrogen fluoride gas (HF) therefrom. These processes have become industrially important through the use of cyclical temperature and pressure swing adsorption principles. However, for their practical execution, the graphite fluoride adsorbent has to be shaped into mechanically stable macroparticles in the millimeter size range.

Graphite fluoride is generally produced as a layered compound synthesized by direct fluorination of non-fluorinated carbonaceous materials with fluorine gas at elevated temperatures typically in the range of 300 to 650°C. Various carbon materials (hereinafter referred to as "non-fluorinated carbonaceous materials") include, specifically, natural or synthetic graphite. Other non-fluorinated carbonaceous materials and processes of their transformation into graphites and fluorinated graphite are sought to maximize performance over cost in producing desirable adsorbents for gas separation systems.

Efficient adsorption of impurities from a gas stream by a (CF_{X})ₙ adsorbent preferably occurs in the temperature range of from about -160°C to about 20°C, more preferably from about -130°C to about -40°C, and most preferably for about -80°C to about -40°C. Further, efficient adsorption of the impurities on the (CF_{X})ₙ adsorbent preferably occurs in a pressure range of from about 300 torr to about 2,000 torr, and more preferably from about 500 torr to about 1,200 torr.

Graphite fluoride is a highly desirable lubricant because it cannot be wetted (i.e. it does not absorb or otherwise associate with water molecules). This characteristic, while ideal for lubricants, presents a problem if the graphite fluoride is used as an adsorbent such as for gas chromatography and bulk-separation and purification processes. This is because the starting microparticles typically in the µm-size range must be transformed into macroparticles typically in the mm-size range.

Graphite fluoride and related (CF_{X})ₙ materials are desirably formed into such macroparticles typically as stable shaped objects such as pellets, extrudates and granules, in order to be used as an effective adsorbent. These shaped objects have a size typically in the range from about 0.1 mm to 10 mm, and preferably in a size range of from about 1 to 5 mm.

The preparation of (CF_{X})ₙ materials for use in adsorbents typically involves fluorinating a non-fluorinated carbonaceous material such as graphite, which exists as an extremely fine powder with sizes of typically no more than about 2 microns, more typically less than 1 micron. Such (CF_{X})ₙ microparticles are extremely low in surface energy and are, thus, extremely hydrophobic. It is very difficult to prepare macroparticles in the form of mechanically stable shaped objects (e.g. pellets, extrudates and granules) for use as a column-packing adsorbent material typically in the range of 1 to 5 mm from such microparticles. In particular, the microparticles of the starting (CF_{X})ₙ material are so small and so hydrophobic, that they are very difficult to handle, and a significant amount may be lost during processing, especially when trying to directly compress the same into a shaped object. The microparticles of (CF_{X})ₙ, when handled and, especially, when subjected to pressure, become airborne and thus will not be available to form the final product.

It would therefore be a significant achievement in the art to be able to provide a process for producing (CF_{X})ₙ adsorbent materials suitable for use in packed columns, in which the problems associated with the handling of (CF_{X})ₙ microparticles can be reduced or even eliminated.

It would be a further advance in the art to provide intermediate materials that can be readily formed into the desired adsorbents without the problems associated with prior art processes.

### Summary Of The Invention

The present invention is generally directed to a method of forming an adsorbent composition suitable for preferentially separating a fluorine-containing gas from a gas stream containing the same, in which a (CF_{X})ₙ starting material can be routinely shaped into macroparticles and used without the problems typically associated with the employment of starting materials of (CF_{X})ₙ in the form of microparticles.

In a particular aspect of the present invention, there is provided a method of forming an adsorbent composition suitable for preferentially separating a fluorine-containing gas from a gas stream containing the same comprising:
a) combining a (CF_{X})ₙ starting material with a non-fluorinated carbonaceous material, wherein x is from about 0.6 to 1.2 and n is an integer, to form a mixture;
b) exerting sufficient pressure on the mixture to form a shaped solid body;
c) heating the shaped solid body to a temperature of at least 100°C to form a heated shaped solid body; and
d) exposing the thus heated shaped solid body to a fluorine-containing gas under conditions sufficient to fluorinate the heated shaped solid body to produce a (CF_{X})ₙ final product wherein x is from about 0.5 to 1.2.

The mixture formed by combining the (CF_{X})ₙ starting material with a non-fluorinated carbonaceous material is held together by the combination of the two materials alone or in combination with other additives that provide the properties of binding and/or wetting to the mixture, so that the resulting mixture can be successfully compressed into a mechanically stable solid body in the form of macroparticles. In accordance with the present process, the (CF_{X})ₙ starting material remains dispersed in the non-fluorinated carbonaceous material and, therefore, cannot become airborne when pressure is applied to form the solid body. As a result, the present process eliminates the problems associated with attempting to directly compress the microparticle sized (CF_{X})ₙ starting material.

In accordance with the present invention, the mixture, after compression to form the solid body, can then be readily fluorinated to ensure that there is sufficient fluorination so that the value of x in the final product is from about 0.5 to 1.2, preferably about 1.0 or higher.

It is important to consider that the compressed solid body expands when undergoing fluorination. This expansion may be up to about 120% of the original size of the solid body prior to fluorination. The resulting expansion can cause mechanical decay. Therefore, the relative amount of the starting materials used to form the mixture as well as conditions of the process steps such as pressure are considered to achieve sufficient mechanical stability of the final product.

### Detailed Description Of The Invention

The method of the present invention produces a shaped (CF_{X})ₙ adsorbent product, which can be effectively used to preferentially separate a fluorine-containing gas such as fluorine gas, hydrogen fluoride gas or fluorohalocarbons from a gas stream containing the same when used in a column or other similar vessel appropriate for adsorption-separation and purification processes. The starting material employed in the present process is a (CF_{X})ₙ starting material, in which x is from about 0.6 to 1.2 and n is an integer. Unlike prior-art processes, which immediately attempt to compress the (CF_{X})ₙ starting material in the form of microparticles (i.e. fine powder having a particle size typically no more than 2 microns), the present invention combines the (CF_{X})ₙ starting material with a non-fluorinated carbonaceous material, prior to shaping into macroparticles, typically having a size up to 10 mm.

The non-fluorinated carbonaceous material may be any such carbon material, which when fluorinated, may be used to separate the fluorine-containing gas (e.g. fluorine gas) from gas streams containing the same. If a non-fluorinated carbonaceous material chosen for use in the present invention is not graphite, it is preferred if such material is graphitizable. Suitable examples of non-fluorinated carbonaceous materials are natural or synthetic graphite, tars or pitches of petroleum and coal, particularly coal-tar pitch, partially graphitized tars or pitches of coal and petroleum (or other very high-boiling petroleum residuals), coke, carbon fibers, carbon mesophase materials, and combinations thereof and the like. High-boiling petroleum residuals are those materials obtained as residual components from the highest boiling fraction of gasoline production, and include, for example, bitumen, asphalt and the like.

The non-fluorinated carbonaceous materials possess sufficiently high surface energy that they are no more than minimally hydrophobic. Thus, they can be readily combined with the highly hydrophobic (CF_{X})ₙ starting materials to form a mixture, in which the microparticles of (CF_{X})ₙ are uniformly dispersed in and thereby assimilated by the non-fluorinated carbonaceous material. The resulting mixture may be readily compressed, to thereby form a shaped solid body, heat-treated and, optionally, exposed to a "cryogenic-shock" treatment.

The mixture of the (CF_{X})ₙ starting material and the non-fluorinated carbonaceous material typically comprises from about 70 to 95% by weight of (CF_{X})ₙ, preferably 75 to 85% by weight and from about 5 to 30% by weight, preferably 10-20% by weight of the non-fluorinated carbonaceous material based on the total weight of the mixture. A preferred amount of the (CF_{X})ₙ starting material is about 80% by weight and a preferred amount of the non-fluorinated carbonaceous material is about 20% by weight based on the total weight of the mixture. It will be understood that the amounts of both the (CF_{X})ₙ material and the non-fluorinated carbonaceous material may vary over the broader range described above, especially if other materials are added to the mixture as described hereinafter. It is particularly advantageous to use partially graphitized non-fluorinated carbonaceous materials as a component of the mixture suitable for forming shaped macroparticles.

The mixing step is performed in a manner sufficient to preferably provide a uniform mixture of the starting materials typically under atmospheric pressure and ambient pressure. Preferably the starting materials are comprised of the (CF_{X})ₙ starting material, a non-fluorinated carbonaceous material, an (extraneous) binder and optionally a wetting agent. There are non-fluorinated and partially graphitized carbonaceous materials that serve as both a carbon source for post-shaping (CF_{X})ₙ generation by fluorination and as a binder. Mixing a (CF_{X})ₙ starting material with a non-fluorinated carbonaceous material is preferably performed under conditions sufficient to form a homogeneous blend, for example, within appropriate mixing equipment, and to allow for formation of seeds or cores of a solid body. Generally, mixing takes place at a speed of between 500 and 3,000 rpm. The thus prepared mixture is shaped into said macroparticles by such processes as dry pressing, extrusion and granulation.

The formation of a shaped solid body (i.e. "shaping") takes place at pressures and temperatures sufficient to form a mechanically stable solid body in the range of up to 10 mm, preferably 1 to 5 mm. In shaping by dry pressing, the pressure for forming a solid body is typically in a range from about 90 to 140 MPa, and the temperature is typically ambient. In shaping by extrusion, the mixture prepared as described is kneaded in a typical kneader of appropriate size, and then extruded, for example, by means of a Brabender screw-type extrusion apparatus. Shaping by granulation may be performed in Eirich rotating-plate type mixers. Extrusion and granulation proceed at ambient temperature without exertion of additional external pressure.

Irrespective of the type of shaping procedures applied, all shaped samples must be hardened to form a solid matrix. The procedure of hardening the shaped macroparticles comprises heat treating the same typically in a chamber kiln or rotating kiln. The temperature of the heat treatment step will generally be at least 100°C, typically in a range of from about 100 to 500°C, depending on the type of non-fluorinated carbonaceous material, the type of optional binder and the shaping method. A preferred temperature range is from about 150 to 500°C. A most preferred heat treatment procedure for pellets obtained by the dry-pressing method, is conducted at a temperature of about 200°C. Besides hardening, heat treatment removes water and other volatile components from the shaped body which is advantageous prior to fluorination.

After heating at elevated temperatures, the shaped body may optionally be subjected to "cryogenic-shock" treatment at typical cryogenic temperatures, to further assist in stabilizing and hardening the shaped body. The temperature for this treatment should be sufficiently below the temperature anticipated for the process of the separation of the fluorine-containing gas from gas streams containing the same. The "cryogenic-shock" treatment has the purpose of stabilizing the adsorbent material under the extreme conditions. It also serves the purpose of testing the mechanical stability of the adsorbent under these same extreme conditions. The cryogenic shock can be applied to the shaped bodies before or after their post-shaping fluorination, preferably after.

It will be appreciated that the described procedures include forming solid bodies in macroparticle sizes suitable for their usage as adsorbents in a column or other such vessel appropriate for processes of purification and separation of gases. Typically the size of the adsorbent material will be in the range from 0.1 mm up to 10 mm, and, preferably, in the range of about 1 to 5 mm. Thus, the formation of the solid body includes typically mixing the starting materials until homogeneity has been reached, compressing the mixture and heat treating the mixture as well as some type of granulation, extrusion or other similar process well known to those of ordinary skill in the art for forming larger sized bodies from smaller sized particles without materially changing the basic properties of the smaller sized particles.

Once the shaped body is formed and treated in accordance with the present invention, the composition comprises (CF_{X})ₙ and a non-fluorinated carbonaceous material, such as natural or synthetic graphite, tars or pitches of petroleum and coal, particularly coal-tar pitch, partially graphitized tars or pitches of coal and petroleum (or other very high-boiling petroleum residuals), coke, bitumen, carbon fibers, carbon mesophase materials, and combinations thereof and the like, which can then be fluorinated to produce the desired (CF_{X})ₙ final product. Depending on the type of non-fluorinated carbonaceous material utilized, a portion of the same undergoes an "oxidative reaction" of carbon with fluorine (i.e. the carbon is "burned off') to compensate for the expansion caused by fluorination. This step of the process is accomplished by exposing the dry, hardened and optionally cryogenically shocked solid body to fluorine gas at a temperature and pressure sufficient to both fluorinate the solid body so that the value x in the final material is suitable for the desirable adsorbent, and to "burn away" part of the non-fluorinated carbonaceous material.

Depending on the temperature of fluorination and the extent of fluorination, the reaction time and the degree of "burning-off" of the non-fluorinated carbonaceous material will vary. Thus, careful control of the fluorination procedure is desirable with specific consideration of the type of raw non-fluorinated carbonaceous material that is employed. Furthermore, for a given reaction temperature, the value of x in (CF_{X})ₙ, which characterizes the fluorine-to-carbon ratio of the graphite fluoride, will decrease with increasing pressure of the fluorination gas (F₂). The temperature of the fluorination step will typically be in the range of from about 300 to 650°C, preferably from 400 to 600°C.

The fluorination step will be typically conducted in a closed vacuum system with varying partial pressure of the fluorine gas, of the type described in detail by N. Watanabe et al., Studies in Inorganic Chemistry, vol. 8, Graphite Fluorides, Elsevier, Amsterdam, 1988, pp. 24-35, incorporated herein by reference. In general, the F₂ pressure will be as low as 100 torr and as high as 2,000 torr, preferably between 200 and 600 torr.

The value of x in the final product (CF_{X})ₙ is difficult to accurately control since it depends on several interconnected variables. The principal variables include the chemical composition of the starting materials, particle size, morphology of the non-fluorinated carbonaceous material, the degree of fluorination, reactivity towards fluorine gas as a function of time, temperature and partial pressure of the fluorine, i.e. the extent to which the non-fluorinated carbonaceous material undergoes concurrent reactions of fluorination and "burning-off", as well as the purity of the fluorination gas.

For example, starting with a composition containing (CF_{X})ₙ with x in the range from 0.6 to 1.2, and a non-fluorinated carbonaceous material very roughly expressed by the formula (CF_{O})ₙ, and presupposing that about half of the non-fluorinated carbonaceous material will be "burned off" during the process of fluorination, an approximate composition of the final (CF_{X})ₙ product can be assessed by accounting for the amount of non-fluorinated carbonaceous material fed into the shaped process, the temperature as well as fluorine pressure applied in the fluorination-process chamber. By way of example, if the non-fluorinated carbonaceous material of the starting mixture is present in an amount of 30% by weight, the x value for the composition before fluorination will be approximately of 0.4 < x < 0.85, which range will change to approximately 0.5 < x < 1,02, if half of the originally non-fluorinated carbonaceous material is "burned off' as a result of fluorination. If one further presumes that the fluorine-to-carbon ratio for the remaining and original non-fluorinated carbonaceous material assumes a value x approximately equal to 1, then the final (CF_{X})ₙ product will have an x value of approximately 0.58 < x <1.17. Thus, the degree of fluorination of a final (CF_{X})ₙ product (i.e. the value of x) will be slightly less than the value of x in the (CF_{X})ₙ starting material (i.e. 0.6 < x < 1.2). Due to the very complex nature of the composite system and multiple chemical reaction parameters during fluorination, the final (CF_{X})ₙ product will have a fluorine-to-carbon ratio typically about 5% less than the (CF_{X})ₙ starting material.

Other materials may be added to the mixture in the initial step of the present process. Such materials include binders and/or wetting agents. It will be understood that some non-fluorinated carbonaceous materials serve not only as a source of carbon but also have the properties of a binder. A suitable example of a non-fluorinated carbonaceous material with binding properties is coal-tar pitch. Extraneous binders may be added to assist in the formation of larger particles and to enhance the mechanical stability of the composition during processing into macroparticles to prevent decay of the final product during use in processes of purification and separation of gases. In particular, binders may be used for this purpose if the non-fluorinated carbonaceous material as described above does not entirely provide the desired characteristics to the mixture within the range of amounts for the starting materials.

A binder may be any material which can effectively be included in the mixture to form a mechanically stable solid body and which does not interfere with the adsorption properties of the desired product. Examples of suitable binders include polyvinyl alcohols, epoxy resins [e.g. SURA, which is a hydrophobic epoxy resin (diglicidyl ether of bisphenol A) with a fluorinated prepolymer as hydrophobic agent) supplied SURA Chemicals GmbH, Jena, Germany]. Other binders include, for example, fluorinated polymers (e.g. polytetrafluoroethylene) and copolymers thereof (e.g. PFA 6900N sold by Dyneon YLC, Oakdale, Minnesota). The amount of the binder when used in combination with the (CF_{X})ₙ starting material and the non-fluorinated carbonaceous material is from about 5 to 30% by weight based on the total weight of the solid body. A preferred amount of the binder will typically be about 10% - 20% by weight based on the total weight of the solid body.

The mixture of the (CF_{X})ₙ starting material and non-fluorinated carbonaceous material may include a wetting agent. Typical wetting agents include lower alkanols (e.g. ethanol, isopropanol), liquid alkanes (e.g. n-octane), liquid fluoroalkanes (e.g. perfluorinated C₆ to C₈ alkanes such as perfluoroheptane), liquid chloroalkanes (e.g. 1,1,1-trichloromethane), terpenes (e.g. limonene), terpene alcohols (e.g. citronellol) and combinations thereof. Preferred wetting agents include ethanol, isopropyl alcohol, perfluoroheptane and limonene. The amount of the wetting agent will typically be in the range of from about 10 to 50% by weight based on the total weight of the solid ingredients before shaping. A preferred amount for the wetting agent would typically be about 30% by weight. As previously indicated, the wetting agents will typically be driven off from the shaped bodies during the post shaping heat treatment.

The (CF_{X})ₙ starting material employed in the present invention may be purchased (e.g. Carbofluor™, grade 2065 with x approximately equal to 1.15) from such sources as Advanced Research Chemicals, Inc. or may be prepared by such known methods as finely grinding a non-fluorinated carbonaceous material (e.g. graphite material) to form microparticles, exposing the microparticles of graphite to a fluorine gas at a temperature and pressure sufficient to produce a (CF_{X})ₙ intermediate material. The thus prepared (CF_{X})ₙ starting material may then be combined with the same or different non-fluorinated carbonaceous material in accordance with the present invention.

The following examples are illustrative of embodiments of the invention and are not intended to limit the invention as encompassed by the claims forming part of the application.

### EXAMPLE 1

A mixture was prepared by combining graphite fluoride (CF_{X})_{n'} graphite and tar in a weight ratio of 8:1:1. The graphite fluoride (CF_{X})ₙ is Carbofluor™, grade 2065, with x approximately equal to 1.15, obtained from Advanced Research Chemicals, Inc., having the properties shown in Table 1. The graphite is Premium Graphite 240 mesh (particle size d₅₀ = 40.08 µm) obtained from Durrans GmbH. The tar is Blockbitumen-100/25 obtained from Bornit-Werk Aschenborn GmbH, Zwickau, which is a coal-tar pitch product, and is used for its binding properties.

The materials were mixed at ambient temperature in a laboratory-scale high-performance mixer (type LM manufactured by MTI Mischtechnik Industrieanlagen GmbH, Detmold, Germany) having a volume of 1.85 liters and a diameter of 160 mn with a revolution rate of from 500 to 3,000 rpm. The graphite fluoride (CF_{X})ₙ and graphite were mixed in the mixer at a revolution rate of 1,000 rpm for one minute. Thereafter, the tar was added to the mixture which was then mixed for two minutes at revolution rates of 1,500 to 3,000 rpm to form a composition of approximately 300 ml in size.

**Table 1**

| ARC Carbofluor™ Grade 2065 Properties | |
|---|---|
| Color | White |
| Carbon Source | Carbon Black |
| Total Fluoride | 64-65% |
| x in (CF_{X})ₙ | 1.15 |
| Free oxid. Powder (iodiometric method) | <0.2% |
| Median Particle Size, d₅₀ | 1.75 µm |
| True Density | 2.5 g/ml |
| Bulk Density | 0.1 g/ml |
| Surface Area (N₂ BET) | 369 ± 6 m²/g |
| Decomposition Temp | 500°C |
| Thermal Conductivity (at STP) | 0.4 J/m-sec-K |
| Heat Capacity (at STP) | 0.8 J/g-K* |

| | |
|---|---|
| * Based on literature value, varies considerably between -200°C and 200°C. | |

The composition was prepared for dry pressing by adding ethanol and limonene in a 1:1 ratio in an amount of 30% by weight to form a solid paste. The paste was mixed at a revolution rate of 500 rpm for one minute to homogenize the composition. The resulting composition was subjected to press/sieve granulation at ambient temperature, by a mechanical dry press of the type TPA 16 at a pressure in the range of 90 - 140 MPA, to obtain a free-flowing material suitable for compression. Pellets were made by dry pressing the free-flowing material using a dry press of the type TPA2. The pellets were made of uniform size of 3.5 mm in both diameter and height. The pellets were dried in an oven at 80°C for 4 hours.

The pellets were then heat treated to cure the same in a laboratory-type chamber kiln at a temperature of 200°C. The "curing program" was conducted by increasing the temperature of the kiln with the composite sample therein at a rate 2 K/min up to the composite-specific temperature and maintaining the sample at this temperature for one hour. After the heat treatment, the sample was removed from the kiln and cooled under ambient conditions.

A sample of the thus fabricated composite pellets is placed in a sealed reactor and evacuated. Fluorine gas is added at a pressure of 200 torr and maintained for 120 minutes at a temperature of 385°C to form a final product (CF_{X})ₙ, wherein the value of x is approximately 1.13.

### EXAMPLE 2

Another (CF_{X})ₙ product sample was prepared in the same manner as described in Example 1, but with a different ingredient composition of the starting blend and the wetting agent. The sample was comprised of graphite fluoride (CF_{X})ₙ, graphite and polyvinyl alcohol with a weight ratio of 8:1.5:0.5.

The graphite fluoride (CF_{X})ₙ is Carbofluor™, grade 2065, with x approximately equal to 1.15. The graphite is of the type Premium Graphite 240 mesh. The binder is Mowiol 4-88 polyvinyl alcohol supplied by Clariant GmbH, Germany. The wetting agent is a water-ethanol mixture with a volume ratio of 1:1.

The resulting pellets were of a uniform size measuring 3.5 mm in both diameter and height. The heat treatment for curing of this material was conducted in a laboratory-type chamber kiln at a temperature of 110°C.

The final product (CF_{X})ₙ has a value for x of approximately 1.09.

### EXAMPLE 3

Another (CF_{X})ₙ product sample was prepared in the same manner as described in Example 1 but with a different ingredient composition of the starting blend and the wetting agent. The sample was comprised of graphite fluoride (CF_{X})ₙ, graphite and epoxy resin SURA in a weight ratio of 8:1:1. The graphite fluoride (CF_{X})ₙ is of the type Carbofluor ™m grade 2065, with x^{∼} 1.15. The graphite is of the type Premium Graphite 240 mesh. The binder is of the SURA type 1102, which is an epoxy resin (diglicidyl ether of bisphenol A) with a fluorinated prepolymer as hydrophobic agent as it is supplied by SURA Chemicals GmbH, Hena, Germany. Ethanol was used as wetting agent in an amount of 40% by weight of the solid paste.

The heat treatment for curing of this material was conducted in a laboratory-type chamber kiln at a temperature of 200°C.

The final product (CF_{X})ₙ has a value of x of approximately 1.10.

### EXAMPLE 4

Another (CF_{X})ₙ product sample was prepared in the same manner as described in Example 1 but with a different ingredient composition of the starting blend binder and wetting agent. The sample was comprised of graphite fluoride (CF_{X})ₙ, graphite and a fluorothermoplastic in a weight ratio of 8:1:1. The graphite fluoride (CF_{X})ₙ is of the type Carbofluor™, grade 2065, with x^{~} 1.15. The graphite is of the type Premium Graphite 240 mesh. A fluorothermoplastic, 3M Dyneon PFA 6900N, was used as a binder. This binder comprises a solid component, 50% in weight, dispersed in water where the solid component is a processable copolymeric melt of tetrafluoroethylene and perfluorinated comonomers having a viscosity lower by several orders of magnitude than that of PTFE. The binder appears to also function as a wetting agent. After drying, the intermediate was divided into two samples, 4/1 and 4/2.

The heat treatment for curing of the two samples 4/1 and 4/2 was conducted in a laboratory-type chamber kiln at temperatures of 320 and 480°C, respectively.

One sample is fluorinated, which results in a final product (CF_{X})ₙ having a value of x of 1.14.

### EXAMPLE 5

The (CF_{X})ₙ product materials of Examples 1-4 prior to fluorination were tested in a series of experiments to characterize their physical and specifically mechanical stability properties to withstand experimental post-shaping fluorination conditions and to assess their capability of being used as adsorbent materials in bulk separation and purification processes. The following test experiments were performed:

Cryogenic shock test: The adsorbent material (CF_{X})ₙ hardened by post-shaping thermal treatment ("curing") is fed into a Dewar vessel filled with liquid N₂(-196°C) and immersed therein for 10 minutes. After discharge from the vessel the material is kept at ambient temperature for 30 minutes, and then immersed again in liquid N₂. This cycle was performed three times.

Compressive strength test: A compressive strength test in accordance with the TIRA test 2300 (sensor: 1kN, pressure device with a calotte) is performed before and after cryogenic shock treatment of the thermally "cured" shaped products. For this purpose, the pressure force exerted and related values of tensile strength were measured on ten shaped (CF_{X})ₙ particles and averaged to characterize the ultimate sample strength.

Abrasion test: An abrasion test with an "abrasive wheel" using a tablet-test equipment of the type ERWEKA TAR 20 with test sample mass of 10 g was performed. The mass of fines with a 100 µm particle size was determined as percentage of the original sample weight as dependent over the time of the test.

Specific surface area (BET test): Nitrogen adsorption isotherms (5-point test) at a temperature of 77.3 K were measured using a Micromeritics ASAP 2010 system and evaluated for the BET specific surface area, m²/g.

A compilation of results for (CF_{X})ₙ shaped obtained in accordance with Examples 1-4 is presented in Table 2.

**Table 2**

| Mechanical Properties of (CFₓ)ₙ Products Before Fluorination (Sample Size: 3.5 mm; height/diameter approximately equals 1) | | | | |
|---|---|---|---|---|
| Material of Example No. | Compressive Strength/MPA (before cryogenic shock) | Compressive Strength/MPA (after cryogenic shock) | Abrasion/ % (After 5 hours) | BET specific surface area / m²/g |
| 1* | 19.1 ± 2.5 | 18.0 ± 3.4 | - | 133.5 ± 2.9 |
| 2 | 20.02 ± 3.55 | 16.39 ± 3.4 | 2.2 | 235.1 ± 5.3 |
| 3 | 10.98 ± 1.37 | 7.23 ± 1.25 | 5.8 | 247.6 ± 6.9 |
| 3* | 26.6 ± 2.9 | 17.5 ± 3.0 | - | - |
| 4/1 | 8.18 ± 0.99 | 3.19 ± 0.78 | 4.1 | 250.9 ± 4.7 |
| 4/2 | 5.01 ± 1.42 | 3.73 ± 1.30 | 7.0 | 213.1 ± 3.8 |

| | | | | |
|---|---|---|---|---|
| * (Sample Size: 8 mm; height/diameter approximately equals 1) | | | | |

It can be concluded from Table 2 that the mechanical properties of (CF_{X})ₙ products produced in accordance with the present invention making the product suitable for use as an adsorbent for the preferential separation of a fluorine-containing gas from a gas stream containing the same are excellent.

## Claims

1. A method of forming an adsorbent composition suitable for preferentially separating a fluorine-containing gas from a gas stream containing the same comprising:
a) combining a (CF_{X})ₙ starting material with a non-fluorinated carbonaceous material wherein x in the starting (CF_{X})ₙ material is from about 0.6 to 1.2 and n is an integer, to form a mixture;
b) exerting sufficient pressure on the mixture to form a shaped solid body;
c) heating the shaped solid body to a temperature of at least 100°C to form a heated shaped solid body; and
d) exposing the thus heated shaped solid body to a fluorine-containing gas under conditions sufficient to fluorinate the heated shaped solid body to produce a (CF_{X})ₙ final product wherein x is from about 0.5 to 1.2.

2. A method according to claim 1, wherein the non-fluorinated carbonaceous material is selected from the group comprised of natural or synthetic graphites, tars or pitches of petroleum and coal, partially graphitized tars or pitches of coal and petroleum, high-boiling petroleum residuals, coke, carbon mesophase materials, and combinations thereof.

3. A method according to claim 1 or claim 2, wherein in the said step (a) the (CF_{X})ₙ starting material is mixed with the non-fluorinated carbonaceous material and at least one extraneous binder to form a solid body.

4. A method according to any one of the preceding claims, wherein the non-fluorinated carbonaceous material acts as a binder.

5. A method according to claim 4, wherein the non-fluorinated carbonaceous material is coal-tar pitch.

6. A method according to claim 3, wherein the extraneous binder is selected from the group consisting of epoxy resins, fluorinated polymers and copolymers thereof, and combinations thereof.

7. A method according to claim 3, wherein the extraneous binder is a polyvinyl alcohol.

8. A method according to claim 6, wherein the extraneous binder is diglicidyl ether of bisphenol A with a fluorinated prepolymer.

9. A method according to any one of the preceding claims, wherein in the said step (a) the (CF_{X})ₙ starting material and the non-fluorinated carbonaceous starting material are mixed with at least one wetting agent to form a solid body.

10. A method according to claim 9, wherein the wetting agent is selected from the group consisting of lower alkanols, liquid alkanes, liquid fluoroalkanes, liquid chloroalkanes, terpenes, terpene alcohols, and combinations thereof.

11. A method according to claim 9, wherein the wetting agent is selected from the group consisting of ethanol, isopropanol, perfluoroheptane and limonene.

12. A method according to claim 1, wherein the amount of the (CF_{X})ₙ starting material is from about 70 to 95% by weight and the amount of the non-fluorinated carbonaceous material is from about 5 to 30% based on the total weight of the mixture (CF_{X})ₙ starting material and the non-fluorinated carbonaceous material.

13. A method according to claim12, wherein the said amount of the (CF_{X})ₙ starting material is from about 75 to 85% by weight and the said amount of the non-fluorinated carbonaceous material is from about 10 to 20% by weight based on the total weight of the (CF_{X})ₙ starting material and the non-fluorinated carbonaceous material.

14. A method according to claim 3, wherein the amount of the extraneous binder is from about 5 to 30% by weight based on the total weight of the solid body.

15. A method according to claim 14, wherein the amount of the extraneous binder is from about 10 to 20% by weight based on the total weight of the mixture.

16. A method according to claim 9, wherein the amount of the wetting agent is from about 10 to 50% by weight based on the total weight of the solid body.

17. The method of claim 9, wherein the amount of the wetting agent is about 30% by weight.

18. A method according to any one of the preceding claims, wherein the shaped solid body is heated to a temperature of from about 150 to 500°C.

19. A method according to any one of the preceding claims, further comprising exposing the heated shaped solid body to a cryogenic treatment prior to or after step (d).

20. A method according to any one of the preceding claims, wherein step (a) is performed under atmospheric pressure and ambient temperature to form the mixture.

21. A method according to any one of the preceding claims, wherein the (CF_{X})ₙ starting material is formed by:
a) finely grinding a non-fluorinated starting carbonaceous material to form microparticles;
b) exposing the microparticles to fluorine gas at a temperature and pressure sufficient to produce the (CF_{X})ₙ starting material, wherein x is from about 0.6 to 1.2;
c) cooling the (CF_{X})ₙ starting material; and wherein
d) the cooled (CF_{X})ₙ starting material is mixed with the same or different non-fluorinated carbonaceous material.

22. A method according to claim 21, wherein the non-fluorinated carbonaceous starting material is graphite.

23. A method according to any one of the preceding claims, wherein x is at least 1.0.

24. A (CF_{X})ₙ adsorbent material produced a method according to any one of the preceding claims.

25. An intermediate material for the formation of a (CF_{X})ₙ adsorbent comprising:
a) a major portion of (CF_{X})ₙ wherein x is from about 0.6 to 1.2 and n is an integer; and
b) a minor portion of a non-fluorinated carbonaceous material.

26. The use as an adsorbent of a composition formed by a method according to any one of the preceding claims in a process for preferentially separating a fluorine-containing gas from a gas mixture containing the fluorine-containing gas.
